# EUROPEAN PATENT SPECIFICATION

(11) **EP 3 540 331 B1**
(45) Date of publication and mention of the grant of the patent: **04.11.2020**
(21) Application number: 19162822.1
(22) Date of filing: 14.03.2019
(51) Int. Cl.: F24T 10/00

(54) **GEOTHERMAL PLANT CONNECTABLE TO A GEOTHERMAL WELL**
AN EINE ERDWÄRMEQUELLE ANSCHLIESSBARE GEOTHERMIEANLAGE
INSTALLATION GÉOTHERMIQUE CONNECTABLE À UN PUIT GÉOTHERMIQUE

(30) Priority: 16.03.2018 DK PA201870171
(43) Date of publication of application: 18.09.2019
(73) Proprietor: APMH Invest IV ApS, 1263 København K (DK)
(72) Inventor: KASTER, Martin, 1902 Frederiksberg C (DK)
(74) Representative: Zacco Denmark A/S

(56) References cited:
- US-A- 5 970 714
- US-A1- 2010 132 390
- US-A1- 2011 224 942
- US-A1- 2011 252 821
- US-A1- 2012 111 004
- US-A1- 2014 150 988
- US-A1- 2015 021 924

## Description

### Summary

The invention relates to a geothermal plant connectable to a geothermal well system and comprising at least two removable modules, at least two module bays and a pipework.

### Background

A geothermal plant or a geothermal production facility has the ability to transform heat from the geothermal water (40-70°C) to hot water with district heating specifications (70-90°C).

District heating plants can provide high efficiencies when the heat is distributed to the customer via a network of district heating pipes, preferably insulated pipes. District heating systems consist of a number of feed and return pipelines. Usually the pipes are installed underground but there are also systems having pipes arranged above ground level.

Geothermal plants typically comprise a heat pump and at least one heat exchanger and by using one or a series of heat exchangers in combination with a heat pump, it is possible to extract energy from the geothermal water and to transfer the heat to the district heating water, thereby being heatable to a high temperature. The cooled geothermal water is hereafter filtered and re-injected in the ground, where the cooled geothermal water is reheated by the higher temperature of the underground.

It is known within the technical field of geothermal plants comprising a number of individual modules to establish a geothermal plant having an number of modules to be installed at a specific location.

One example of a geothermal plant is disclosed in US2010/0132390, which discloses a 4-pipe geothermal heat pump, where the additional two pipes and the associated switching and isolation control system allows for each modules in the modular system to be independently operated.

Document US 2011/0252821 A1 discloses a geothermal plant according to the preamble of claim 1.

One of the disadvantages of this geothermal plant is that is does not reduce the foot print of the installation nor does it provide a modular system design, which can be accommodated into a city environment.

The general object of the present invention is to provide a geothermal plant being connectable to an existing heating system geothermal plant and capable of being accommodated in a city environment to function as a decentral geothermal facility, and which may be readily connected to a city district heating facility pipework.

A further object of the present invention is to provide a modular geothermal facility, which can be integrated in the city environment by having a reduced foot print compared to traditional geothermal facility.

The above need and object together with numerous other needs and objects will be evident from below detailed description, are according to the present invention obtained by :
- at least one of said removable modules having a heat exchanger;
- said module bays including a supporting structure a supporting a removable module;
- said pipework extending below said supporting structure, and including a first pipe assembly being connectable to a first pipe system of said geothermal well at a first connecting end and a second pipe assembly being connectable to an existing facility pipework;
- said module bays supporting said removable modules that include a heat exchanger being provided with a connecting interface for allowing said at least removable modules having a heat exchanger to be interconnected to said pipework.

The above mentioned geothermal plant has the advantage that the foot print is reduced significantly due the use of removable modules, which can be accommodated in the module bays being provided for supporting the removable modules.

The present geothermal plant minimizes many of the possible downsides with large local heating facilities due to a low impact to the surrounding, as it is possible to accommodate the geothermal plane in parks, recreational areas or in residential areas.

By using a number of removable modules it is possible to accommodate a geothermal plant in an urban environment.

The term "district heating", "heat distribution" or "existing network" should in this context be understood as a heat networks or a system for distributing the heat generated in a centralized location.

The term "bunker" should in this context be understood as a cellar construction or a basement, which is partially below the ground level of the geothermal plant.

The term "removable module" should in this context be understood as an equipment module having the mechanical and/or electrical components arranged inside the module. The modules can be hoisted in an out of the geothermal plant during installation or removed dependent on the specific situation. The module would have a standard design to increase the change-out time and will furthermore enable high uptime and flexibility of the system.

### Detailed description

Embodiments of the present invention will now be explained in further detail by reference to the schematic drawings .
FIG. 1 shows a presently preferred embodiment of the geothermal plant of the invention, in the form of a bunker,
FIG. 2 shows a cross-sectional view of the bunker and the pipework position beneath the supporting structure,
FIG. 3 shows a cross-sectional view of the bunker shown in FIG. 2 with some additional features,
FIGS. 4-5 show the installation of the removable modules,
FIG. 6 shows the modules of the systems being interconnected below facility walk ways,
FIG. 7 shows a bunker setup for 2-well systems with a central heat pump,
FIG. 8 shows a second geothermal plant,
FIG. 9 shows a second embodiment of the geothermal plant having horizontal dual compressors installed inside the bunker, and
FIG. 10 shows a third embodiment of the geothermal plant having a modular design and defined by a building at the facility.

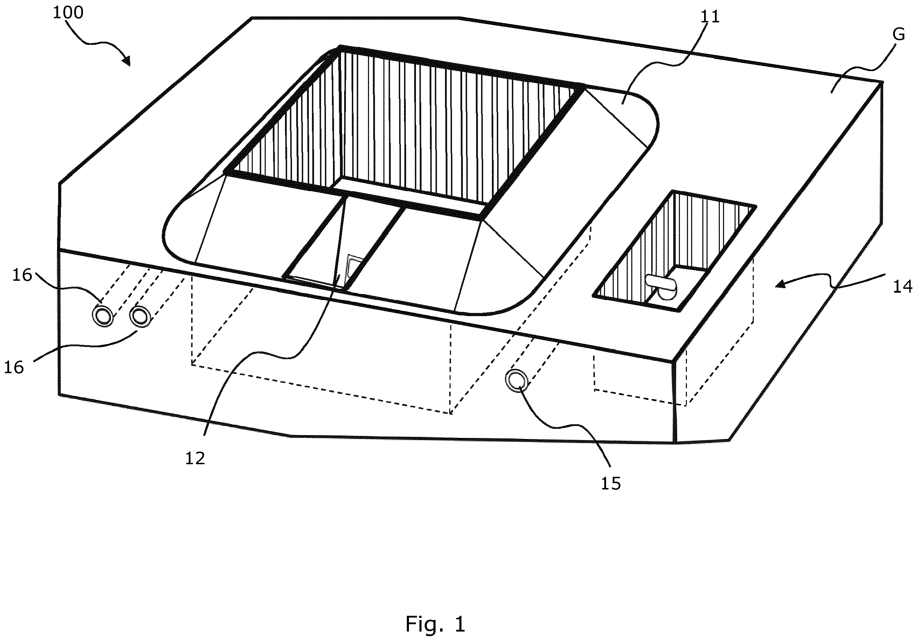

FIG. 1 shows the geothermal plant 100 according to the present invention where the geothermal plant is integrated in a city environment to enable local heat delivery. The geothermal plant 100 comprises a bunker 11 established by digging into the ground the excavated soil having been used to create the bunker 11. The plant 100 provides an advantages effect of reducing the noise level generated by the geothermal plant as the bunker will function as a sound barrier in relation to the surrounding. By using the soil to build the bunker a minimum of soil will have to be removed during the installation of the geothermal plant. The height of the geothermal plant will depend on the height of the modules to be discussed further below. The minimum estimated area required for the geothermal plant would often be in the range of: 28-30 metres x 23-26 metres ∼ 645-780 square meters, preferably 29 metres by 24 metres ∼ 700 square meters.

As will be evident from the figures, the present invention preferably in one embodiment is intended to appear as a bunker or as a cellar-construction to allow the geothermal plant to be arranged in an urban environment.

As shown in FIG. 1, the shown bunker 11 can include an access element in the form of an access door 12. The geothermal plant is connected to a geothermal well 14 located adjacent to the bunker 12 and to a transfer pipeline 15 for transferring discharged cold geothermal water. The geothermal well is covered by an access hatch to prevent personnel from falling into the well itself.

As can been seen the FIGS. 1-10, a number district heating pine lines 16 and at least one transfer line 15 for the cold geothermal water are connected to the geothermal plant 100, 200. The district heating pipe line 16 will form part of an existing heat distribution network also referred to as a heat network and the present geothermal plant will be interconnected to the existing distribution network. Within the system heat storage units may be installed to even out peak load demands.

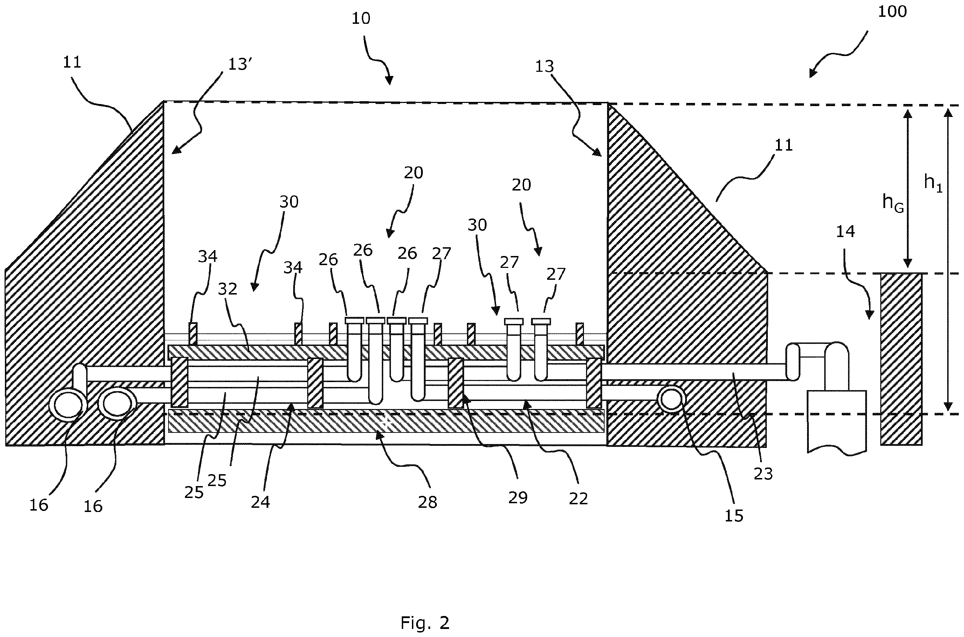

Turning now to FIGS. 2-3, the bunker 11 forms an exterior wall for the geothermal plant and the bunker surrounds removable modules, which are to be installed in the internal space formed by the soil removed during the construction of the bunker 11. The inner compartment 10 of the geothermal plant may as shown be formed by sheet piling driven into the ground, for providing an inner wall for obtaining stability prior to the step of accommodating the removable modules of the geothermal plant. The inner compartment 10 is formed by four inner walls 13, 13' positioned in a rectangular or quadric geometry and the four inner walls provide the necessary stiffening needed for supporting and preventing the bunker hill from collapsing towards the inner compartment 10.

The inner compartment of the bunker 11 has in the shown embodiment a height h_{g} of 7-13 m, preferably 9-11 m and the exterior height of the bunker relative to the ground level G is approximately 4-5 m, whereas the distance between two opposite inner walls is in the range of 11-15 meters, preferably 12-13 meters.

Pipework 20 includes a first pipe assembly 22 comprising a first pipe system 25 being connectable to the geothermal well 14 at a first connecting end and a second pipe assembly 24, which is connectable to an existing facility pipework, also referred to as district heating pine lines 16.

The first pipe assembly 22 is connectable to the geothermal well 14 through the use of at least two first interconnecting pipelines 23. The second pipe assembly 24 is connectable to the district heating pine lines 16 through the use of at least two second interconnecting pipelines 25. The pipework 20 furthermore comprises a number of connecting flanges 26,27 for enabling a connection between the module bays 30 and the removable modules (not shown in figure 2-3).

The module bays 30 have a supporting structure 32 for supporting the removable modules and the supporting structures 31 includes a number of upright guide elements 34 being connected to the supporting structure 31. The supporting structure 32 is resting on a number of supporting element 29 arranged on the base element 28 positioned in the lower part of the inner compartment 10. The supporting structure provide the geothermal planet with a facility walkway for the personal operating the geothermal plant, but can also be used during service.

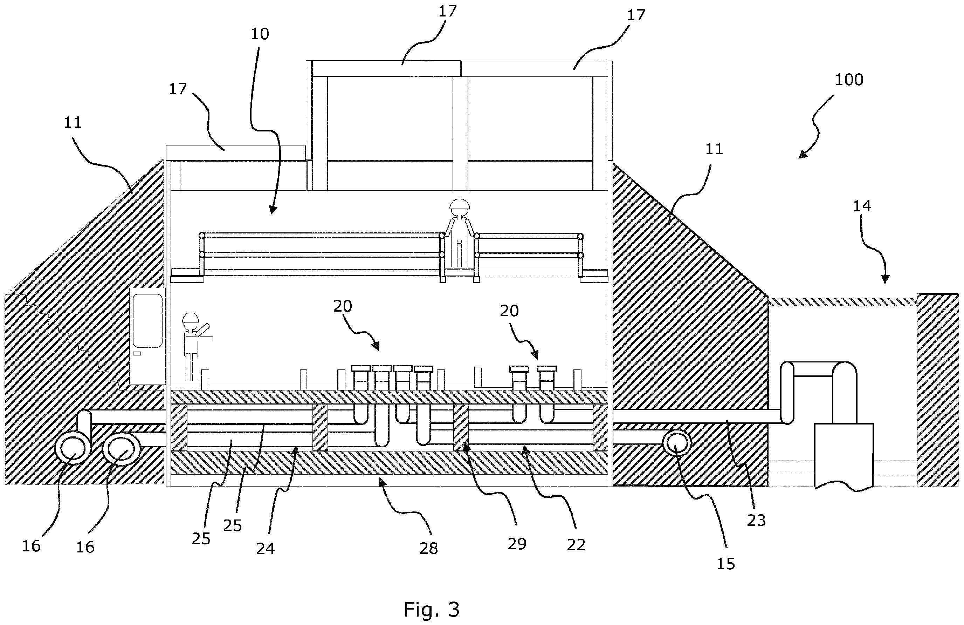

As shown in FIG. 3 the internal compartment 10 has a number of access hatches 17 in the upper part of the inner compartment 10, and the hatches 17 can be opened by pivoting the hatches, hereby providing access for the removable modules to be hoisted and lowered into the bunker 11.

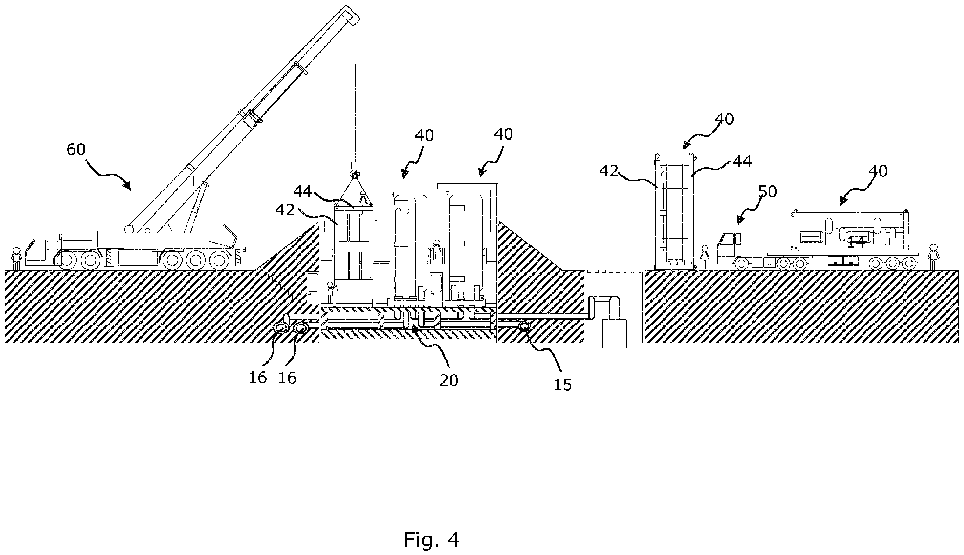

As shown in FIGS. 4-5, the removable modules 40 of the geothermal plant are connected to the pipework 20, which has been installed at the bottom of the inner compartment of the bunker prior to installing the removable modules in the geothermal plant. All pipework and cabling between the removable modules 40 and corresponding control equipment is arranged and runs below the supporting structure 32, whereby the supporting structure 32 functions as a walkway inside the geothermal plant (building) and thereby eases the installation and servicing of the facility equipment.

The geothermal plant 100 (facility) is based on a modular design enabling the removable modules, preferably corresponding in size to or fitting into standard 6 or 12 meters intermodal freight containers, to be assembled off-site and then transported e.g. by a truck 50 to the installation site of the geothermal plant in a lying down position. When the modules arrive, they are raised upright and installed vertically in the facility bunker with a hoisting unit 60 such as a mobile crane. After installation, the module transport frame is removed for allowing better access to the modules.

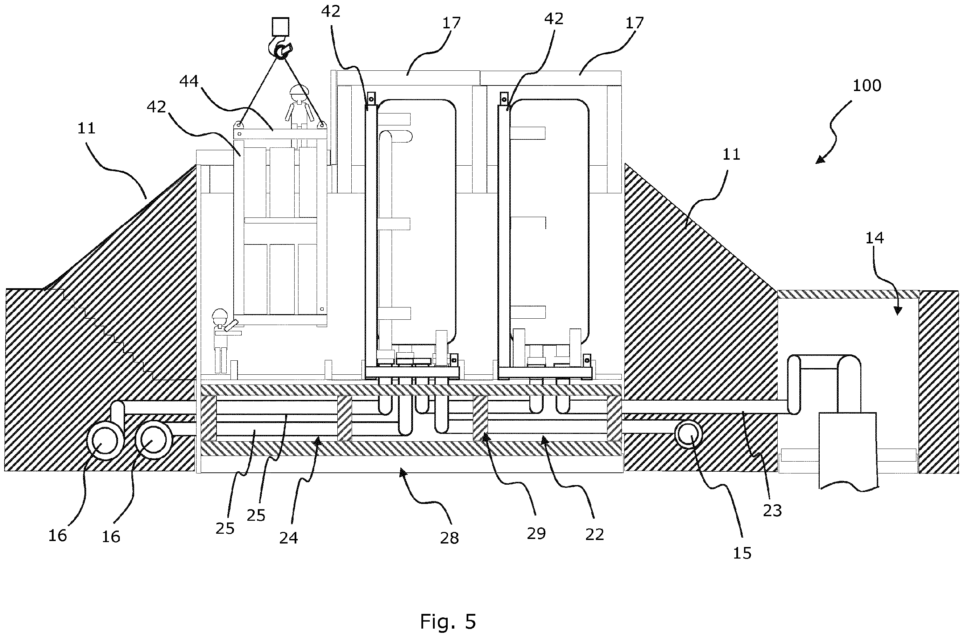

As shown in FIG. 5, each of the removable modules 40 may comprise a module transport frame 42,44 including a first module frame 42 forming a permanent module frame and a second module frame 44 being a removable transport frame (crash frame). By using a module transport frame, which is removable it is possible to enable compact facility footprint.

At least some of the removable modules 40 further comprise an electrical connections junction box positioned in the first module frame and a number of lifting eyes for hoisting the removable modules 40 during installation or service.The module components are mounted in vertical position for reducing the footprint of each of the removable modules.

When the removable modules 40 are to be installed into the bunker facility, the modules are turned 90 degrees as can be seen in FIG. 4. The models are hereafter lowered into the bunker facility. The installation can be done together with local contractors who can be quickly mobilized to perform the installation of the geothermal plant.

After a removable module is installed in the geothermal facility, the transport frame 44 is removed and the pipework 20 and electrical connections are interconnected to the equipment located inside the removable module.

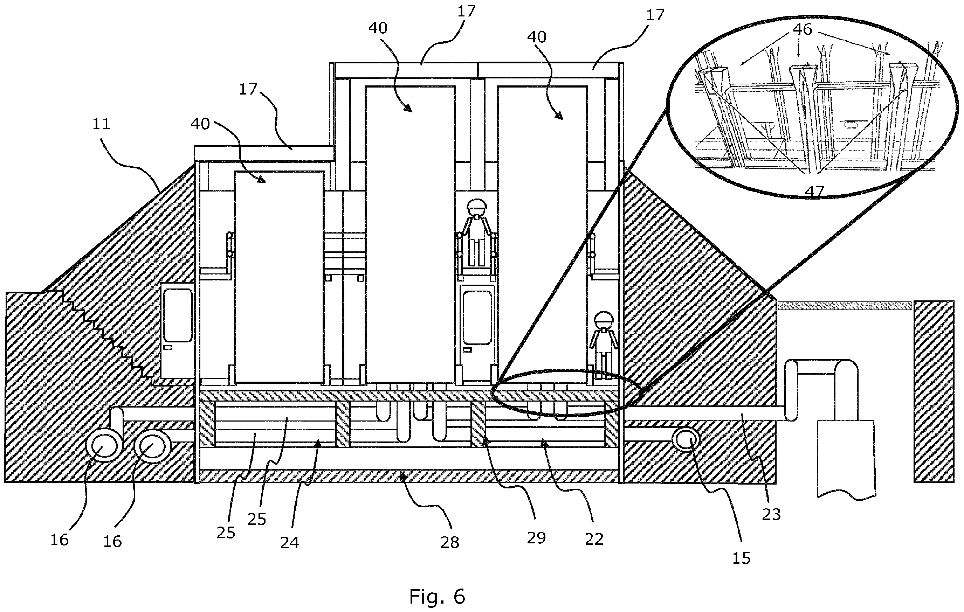

Turning now to FIG. 6, the removable modules 40 are fitted into the bunker facility 11 by using a number of upright module guides 46 which may be similar to those used for guiding freight containers on a container ship. The modules guides 46 provide an easy and precise installation of the removable modules 40 . Each of the modules would preferably have an installation foot-print of about 3x3 meters and a module height of about 6-12 meters depending on the facility.

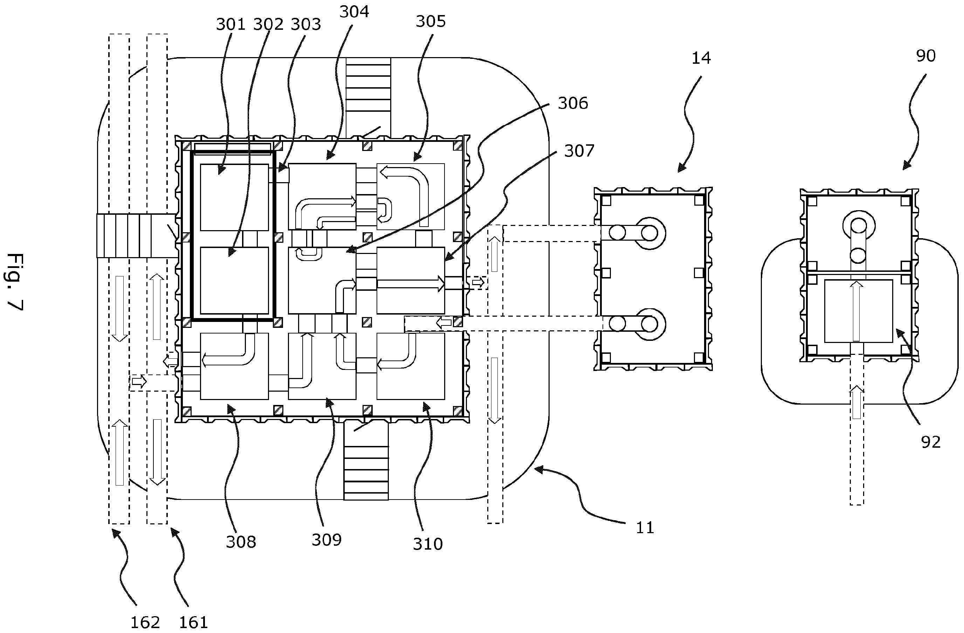

In FIG. 7, the geothermal facility according to a second embodiment of the present invention has a geothermal well 14 been formed as a dual well cellar, a geothermal heat production facility (depicted to the right) and a geothermal reinjection facility 90 comprising an injection pump module 92 depicted to the right side in the FIG. 7.

Each of the modules has a specific function and are interconnected, preferably exclusively at locations below the supporting structure. The shown geothermal facility includes nine individual equipment modules and a pipework being connected to a first district heating pipeline 161 for delivering heated water to the geothermal facility and a second district heating pipeline 162 for returning the water. The electronics and SCADA modules 301, 302 are located in a separate room 303 with HVAC. Pipework 20 between modules and electrical connections are located in a cellar below supporting structure forming the walkway grating and the removable modules. The removable modules are intended to be installed in a vertical position through the hatches in the upper part of the bunker 11. The other removable modules could be a compressor module 304, a condenser HEX 305, an evaporator HEX module 306, a pump module 307 for circulating the geothermal liquid, a pump module 308 for pumping the district heat water, a geothermal HEX module 309 and a filter unit module 310 for filtering the liquid being pump up from the underground.

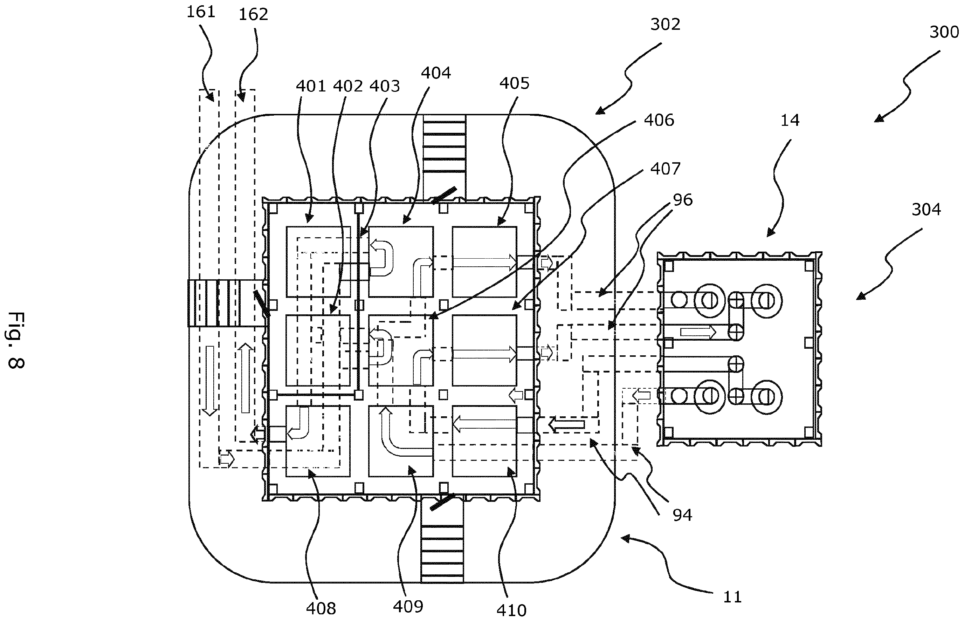

Now referring to FIG.8, a geothermal plant 300 having an reinjection facility 302 is positioned at the vicinity of the geothermal heat exchanging 304. The geothermal well comprises a geothermal production line 94 and a geothermal injection line 96. The geothermal plant 300 comprises of 2 sets of 3 individual equipment modules - one for each well pair.

Each of the modules shown in FIG. 8 has a specific function and is interconnected below the supporting structure. The geothermal plant 300 includes nine individual equipment modules and a pipework connected to a first district heating pipeline 161 for delivering heated water to the geothermal facility and a second district heating pipeline 162 for returning the water.

Pipework 20 between the modules and the electrical connections are located in the cellar below supporting structure forming the walkway grating and the removable modules, when the removable modules are installed in vertical position and installed/replaced through hatches in the upper part of the bunker 11.

The electronics and SCADA modules 402 are located in a separate room 403 with HVAC. The other removable modules would be a pump module 401, a HEX module 404, an injection pump module 405, a HEX module 406, a pump module 407 for circulating the geothermal liquid, a heat transmission pump module 408, and two filter unit module 409, 410 for filtering the liquid being pump up from the underground.

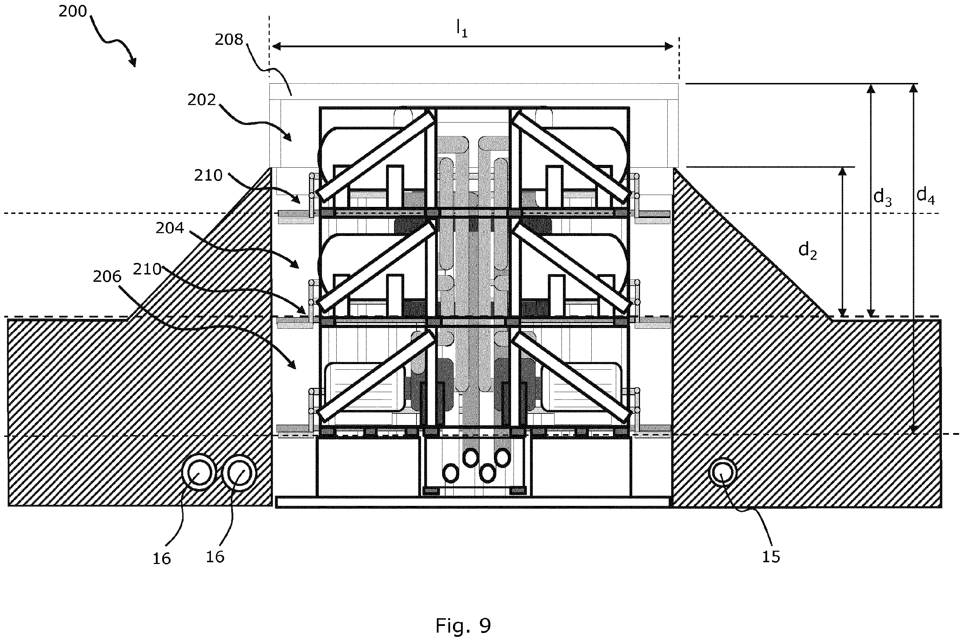

FIG. 9 shows a further embodiment of the geothermal plant having a horizontal dual compressors installed inside the bunker. Each of the removable modules having a compressor unit is arranged in a horizontal position.

In the further embodiment of the present invention, the geothermal plant 200 comprises a evaporator unit 202, a condensator unit 204 and a compressor unit 206. The compressor unit 206 will be hoisted down through the access hatch 208 positioned in the upper part of the geothermal plant and the compressor unit 206 will be lowered down into the internal through the bunker 11. It should be noted that the geothermal well is not depicted in the FIG. 9 for the sake of simplicity.

The evaporator unit 202 will be placed on top of the condensator unit 204, which would be arranged between the evaporator unit 202 and the compressor unit 206. Preferably, the evaporator unit 202 will be dual evaporator unit, the condensator unit 204 will be a dual condensator unit type and the compressor unit 206 will be a dual compressor unit. A number of module splitters/dividers 210 may divide the individual modules 20, 204 and 226.

The distance between the access hatch and the module bays 30 with the pipe flanges may be in the range of 10-15 m.

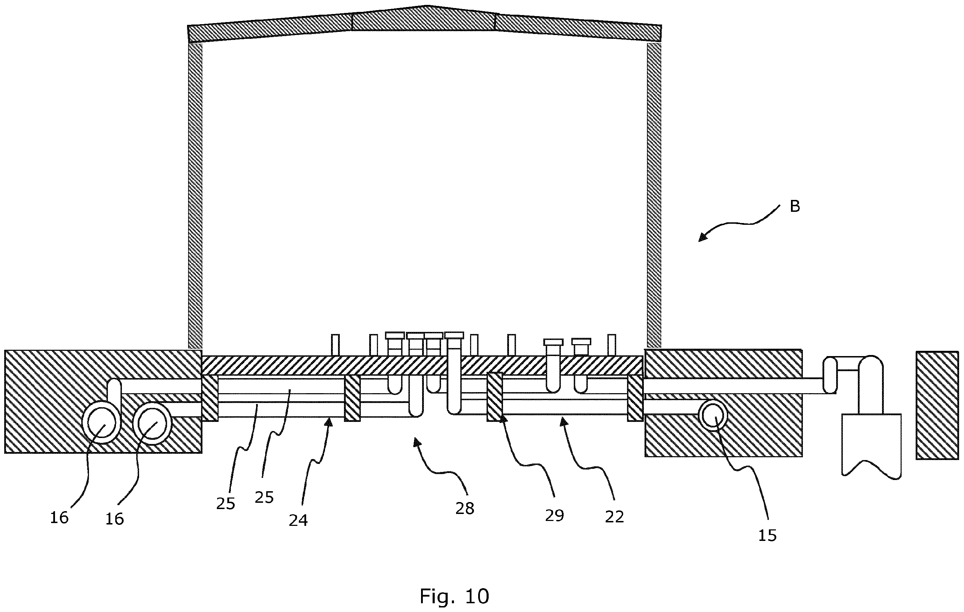

FIG. 10 shows an alternative implementation of the geothermal plant, where geothermal facility have the same components as shown in FIG. 2, but with the difference that the bunker 11 is replaced by a conventional building wall structure or scaffold or the like.

The skilled person would realize, that the module bays depicted in the figures of the present invention is not divided into a number of separate module-bays, but us depicted as one single structure.

It is within the scope of the present invention, the module-bays can be delivered as separate module-bay sections to be assembled at the geothermal installation site. By having a number of separate module-bay sections, it is easier to handle the module bays prior to a assembling step of the module-bays. Each of the module-bays is provided with means allowing the module-bays to be interconnected with one another.

### Reference numbers

In the following is given a list of reference numbers that are used in the detailed description of the invention.
geothermal plant 100, 200, 300
ground level G
inner compartment 10
bunker 11
access door 12
inner wall 13 13'
geothermal well 14
transfer pipe line 15
district heating pipeline 16, 161, 162
access hatch 17
pipework 20
first pipe assembly 22
first interconnecting pipeline 23
second pipe assembly 24
second interconnecting pipelines 25
connecting flanges 26,27
base element 28
supporting element 29
module bays 30
supporting structure 32
guide element 34
removable modules 40, 401, 40, 403, 404, 405, 406, 407, 408, 409
first module frame 42
second module frame 44
module guide 46
tapper guide end 47
truck 50
hoisting unit 60
geothermal reinjection facility 90
injection pump module 92
evaporator unit 202
condensator unit 204
compressor unit 206
access hatch 208
reinjection facility 302
geothermal heat exchanging 304

## Claims

1. A geothermal plant (100,200,300) connectable to a geothermal well (14) and comprising at least two removable modules (40), at least two module bays (30) and a pipework (20):
- at least one of said removable modules (40) including a heat exchanger;
- said module bays (30) including a supporting structure (32) supporting a respective one of said removable modules (40);
- said pipework (20) including a first pipe assembly (22) being connectable to a first pipe system (23) of said geothermal well (14) at a first connecting end and a second pipe assembly (24) being connectable to an existing facility pipework (16); **characterized in that** said pipework (20) extends below said supporting structure (32) and said module bay(s) (30) supporting said removable module(s) (40) that include a heat exchanger are provided with a connecting interface for allowing said at least one removable module(s) having a heat exchanger to be connected to said pipework (20).

2. A geothermal plant according to claim 1, wherein said geothermal plant further comprises a bunker (11) for surrounding the removable modules (40).

3. A geothermal plant according to claim 1 or 2, said removable modules (40) being divided into a first set of removable modules and a second set of removable modules, wherein said first set of removable modules (40) includes a heat exchanger.

4. A geothermal plant according to any previous claims, wherein each of said removable modules (40) comprises an module transport frame including a first module frame (42) forming a permanent module frame and a second module frame (44) being a removable transport frame.

5. A geothermal plant according to any previous claims, said supporting structure comprising a number of upright module guides (46) for guiding said removable modules (40) on installation thereof into said respective module bays (30).

6. A geothermal plant according to any previous claims, said pipework (20) including a number of connecting flanges (26,27).

7. A geothermal plant according to claim 2, said plant further comprising a number of hatches being provided at a first vertical distance above said supporting structure, preferably in the range of 10-15 m.

8. A geothermal plant according to any of the previous claims, said first pipe assembly (22) including a second connecting end with a first connecting flange being located at the opposite end of said second connecting end for interconnecting said first pipe assembly (22) .

9. A geothermal plant according to any of the previous claims, said geothermal well comprises a geothermal production line (94) and geothermal injection line (96).

## Patentansprüche

1. Geothermische Anlage (100,200,300), die mit einem geothermischen Bohrloch (14) verbindbar ist und mindestens zwei entfernbare Module (40), mindestens zwei Modulbuchten (30) und eine Verrohrung (20) umfasst:
- wobei mindestens eines der entfernbaren Module (40) einen Wärmetauscher enthält;
- wobei die Modulbuchten (30) eine Tragstruktur (32) enthalten, die jeweils eines der entfernbaren Module (40) trägt;
- wobei die Verrohrung (20) eine erste Rohrbaugruppe (22), die an einem ersten Anschlussende mit einem ersten Rohrsystem (23) des geothermischen Bohrlochs (14) verbindbar ist, und eine zweite Rohrbaugruppe (24), die mit einer Verrohrung (16) einer existierenden Einrichtung verbindbar ist, enthält;
**dadurch gekennzeichnet, dass**
die Verrohrung (20) sich unterhalb der Tragstruktur (32) erstreckt und die Modulbucht(en) (30), die das/die entfernbare(n) Modul(e) (40), die einen Wärmetauscher enthalten, trägt/tragen, mit einer Verbindungsschnittstelle versehen sind, um zu ermöglichen, dass das mindestens eine entfernbare Modul, das einen Wärmetauscher aufweist, mit der Verrohrung (20) verbunden werden kann.

2. Geothermische Anlage nach Anspruch 1, wobei die geothermische Anlage ferner einen Bunker (11) zum Umgeben der entfernbaren Module (40) umfasst.

3. Geothermische Anlage nach Anspruch 1 oder 2, wobei die entfernbaren Module (40) in einen ersten Satz von entfernbaren Modulen und einen zweiten Satz von entfernbaren Modulen unterteilt sind, wobei der erste Satz von entfernbaren Modulen (40) einen Wärmetauscher enthält.

4. Geothermische Anlage nach einem der vorhergehenden Ansprüche, wobei jedes der entfernbaren Module (40) einen Modultransportrahmen umfasst, der einen ersten Modulrahmen (42), der einen permanenten Modulrahmen bildet, und einen zweiten Modulrahmen (44), der ein entfernbarer Transportrahmen ist, enthält.

5. Geothermische Anlage nach einem der vorhergehenden Ansprüche, wobei die Tragstruktur eine Anzahl von aufrechten Modulführungen (46) zum Führen der entfernbaren Module (40) bei deren Installation in die jeweiligen Modulbuchten (30) umfasst.

6. Geothermische Anlage nach einem der vorhergehenden Ansprüche, wobei die Verrohrung (20) eine Anzahl von Verbindungsflanschen (26,27) enthält.

7. Geothermische Anlage nach Anspruch 2, wobei die Anlage ferner eine Anzahl von Klappen umfasst, die in einem ersten vertikalen Abstand über der Tragstruktur, vorzugsweise im Bereich von 10-15 m, vorgesehen sind.

8. Geothermische Anlage nach einem der vorhergehenden Ansprüche, wobei die erste Rohrbaugruppe (22) ein zweites Verbindungsende enthält, mit einem ersten Verbindungsflansch, der an dem gegenüberliegenden Ende des zweiten Verbindungsendes angeordnet ist, um die erste Rohrbaugruppe (22) zu verbinden.

9. Geothermische Anlage nach einem der vorhergehenden Ansprüche, wobei das geothermische Bohrloch eine geothermische Produktionslinie (94) und eine geothermische Injektionslinie (96) umfasst.

## Revendications

1. Installation géothermique (100,200,300) connectable à un puits géothermique (14) et comprenant au moins deux modules amovibles (40), au moins deux baies de modules (30) et une tuyauterie (20) :
- au moins l'un desdits modules amovibles (40) comprenant un échangeur de chaleur ;
- lesdites baies de module (30) comprenant une structure de support (32) supportant l'un respectif desdits modules amovibles (40) ;
- ladite tuyauterie (20) comprenant un premier ensemble de tuyaux (22) pouvant être connecté à un premier système de tuyaux (23) dudit puits géothermique (14) à une première extrémité de connexion et un deuxième ensemble de tuyaux (24) pouvant être connecté à une tuyauterie d'installation existante (16) ;
**caractérisée en ce que**
ladite tuyauterie (20) s'étend au-dessous de ladite structure de support (32) et
ladite ou lesdites baies de module (30) supportant ledit ou lesdits modules amovibles (40) comprenant un échangeur de chaleur sont munies d'une interface de connexion pour permettre audit au moins un module amovible comportant un échangeur de chaleur à connecter à ladite tuyauterie (20).

2. Installation géothermique selon la revendication 1, dans laquelle ladite installation géothermique comprend en outre un bunker (11) pour entourer les modules amovibles (40).

3. Installation géothermique selon la revendication 1 ou 2, lesdits modules amovibles (40) étant divisés en un premier ensemble de modules amovibles et un deuxième ensemble de modules amovibles, ledit premier ensemble de modules amovibles (40) comprenant un échangeur de chaleur.

4. Installation géothermique selon l'une quelconque des revendications précédentes, dans laquelle chacun desdits modules amovibles (40) comprend un cadre de transport de module comprenant un premier cadre de module (42) formant un cadre de module permanent et un deuxième cadre de module (44) étant un cadre de transport amovible.

5. Installation géothermique selon l'une quelconque des revendications précédentes, ladite structure de support comprenant un certain nombre de guides de module verticaux (46) pour guider lesdits modules amovibles (40) lors de leur installation dans lesdites baies de module respectives (30).

6. Installation géothermique selon l'une quelconque des revendications précédentes, ladite tuyauterie (20) comprenant un certain nombre de brides de raccordement (26,27).

7. Installation géothermique selon la revendication 2, ladite installation comprenant en outre un certain nombre de trappes étant prévues à une première distance verticale au-dessus de ladite structure de support, de préférence dans la plage de 10 à 15 m.

8. Installation géothermique selon l'une quelconque des revendications précédentes, ledit premier ensemble de tuyaux (22) comprenant une deuxième extrémité de connexion avec une première bride de raccordement étant située à l'extrémité opposée de ladite deuxième extrémité de connexion pour interconnecter ledit premier ensemble de tuyaux (22).

9. Installation géothermique selon l'une quelconque des revendications précédentes, ledit puits géothermique comprend une ligne de production géothermique (94) et une ligne d'injection géothermique (96).
